# EUROPEAN PATENT APPLICATION

(11) **EP 4 307 642 A1**
(43) Date of publication of application: **17.01.2024**
(21) Application number: 22794908.8
(22) Date of filing: 26.04.2022
(51) Int. Cl.: H04L 61/45, H04L 67/00

(54) **INFORMATION PROCESSING METHOD AND APPARATUS, AND COMMUNICATION DEVICE**

(30) Priority: 30.04.2021 CN 202110485612
(71) Applicant: Vivo Mobile Communication Co., Ltd., Dongguan, Guangdong 523863 (CN)
(72) Inventor: LV, Huazhang, Dongguan, Guangdong 523863 (CN); WU, Xiaobo, Dongguan, Guangdong 523863 (CN); KE, Xiaowan, Dongguan, Guangdong 523863 (CN)
(74) Representative: Murgitroyd & Company
(86) International application number: PCT/CN2022/089341
(87) International publication number: WO 2022/228438

(57) **Abstract**

This application discloses an information processing method and apparatus, and a communications device, and pertains to the field of communications technologies. The method in this embodiment of this application includes: receiving, by a first communications device, a first analysis request, where the first analysis request is used to request analysis of a first domain name system (DNS) query; and sending, by the first communications device, a first analysis response based on the first analysis request, where the first analysis response includes at least one of following: related information of a first DNS server; and related information of a first application server, where the first DNS server is a DNS server corresponding to the first DNS query, and the first application server is an application server corresponding to the first DNS query.

## Description

### CROSS-REFERENCE TO RELATED APPLICATION

This application claims priority to Chinese Patent Application No. 202110485612.4, filed on April 30, 2021 in China, which is incorporated herein by reference in its entirety.

### TECHNICAL FIELD

This application relates to the field of communications technologies, and in particular, to an information processing method and apparatus, and a communications device.

### BACKGROUND

In the related art, an edge application server discovery function (Edge Application Server Discovery Function, EASDF) is a network element used for processing a domain name system (Domain Name System, DNS) query sent by user equipment (User Equipment, UE). At present, in the prior art, the UE sends the DNS query to the EASDF, and the EASDF determines whether to send the DNS query to a central DNS (Central DNS, C-DNS) or a local DNS (Local DNS, L-DNS) based on the DNS query, and then sends a fully qualified domain name (Fully Qualified Domain Name, FQDN) and other information in the DNS query to a session management function (Session Management Function, SMF). The SMF provides an Internet protocol address (Internet Protocol Address, IP) of a corresponding DNS server for the EASDF, such as C-DNS or L-DNS IP address. Then, after finding an IP address corresponding to the FQDN, the C-DNS or the L-DNS sends an address of an application server to the EASDF (in the form of DNS response), and the EASDF saves a query result to the SMF before sending it to the UE. In this way, the UE obtains a server IP address of a requested FQDN. However, it is difficult to use the foregoing DNS query scheme to find an appropriate server quickly.

### SUMMARY

Embodiments of this application provide an information processing method and apparatus, and a communications device, which can solve the problem that it is difficult to use the existing DNS query scheme to find an appropriate server quickly.

According to a first aspect, an information processing method is provided, including:
receiving, by a first communications device, a first analysis request, where the first analysis request is used to request analysis of a first domain name system (DNS) query; and
sending, by the first communications device, a first analysis response based on the first analysis request, where
the first analysis response includes at least one of the following:
   related information of a first DNS server; and
   related information of a first application server, where
   the first DNS server is a DNS server corresponding to the first DNS query, and the first application server is an application server corresponding to the first DNS query.

According to a second aspect, an information processing method is provided, including:
receiving, by a first communications device, a second analysis request, where the second analysis request carries an address/addresses of at least one second application server;
analyzing, by the first communications device, the at least one second application server, to obtain an analysis result, where the analysis result includes an address of an optimal second application server, or the analysis result includes at least one of a priority of each second application server and service experience of the second application server; and
sending, by the first communications device, the second analysis response, where the second analysis response includes the analysis result, where
the second analysis request is used for requesting at least one of the following:
   obtaining service experience of the second application server in a DNS response;
   determining an optimal second application server among multiple second application servers in the DNS response; and
   determining a priority of each second application server.

According to a third aspect, an information processing method is provided, including:
sending, by a second communications device, a first analysis request, where the first analysis request is used to request analysis of a first domain name system (DNS) query; and
obtaining, by the second communications device, a first analysis response, where
the first analysis response includes at least one of the following:
   related information of a first DNS server; and
   related information of a first application server, where
   the first DNS server is a DNS server corresponding to the first DNS query, and the first application server is an application server corresponding to the first DNS query.

According to a fourth aspect, an information processing method is provided, including:
sending, by a second communications device, DNS query reference information, where
the DNS query reference information includes at least one of the following:
   address information of a DNS server;
   address information of an application server;
   a mapping relationship between the address information and a location of the DNS server;
   a mapping relationship between an address of the DNS server and an ECS option;
   service experience information of the DNS server; and
   service experience information of the application server.

According to a fifth aspect, an information processing method is provided, including:
obtaining, by a third communications device, a DNS response; and
determining, by the third communications device, an accessed application server based on the DNS response, where
the DNS response includes address information of a first application server, the first application server is an application server that is corresponding to a first DNS query and that is determined by a first communications device based on a first analysis request, and the first analysis request is used to request analysis of a first domain name system (DNS) query; or
the DNS response includes a priority of each second application server or an address of an optimal second application server, the second application server is an application server included in a first DNS response, and the first DNS response is a query response sent by a first DNS server.

According to a sixth aspect, an information processing method is provided, including:
sending, by a second communications device, a DNS server address, where the DNS server address carries a mark, where
the mark is used to indicate at least one of the following:
   that the DNS server address is sent by an operator;
   that the DNS server is used for an edge computing scenario;
   that the DNS server address is unable to be changed;
   that the DNS server address is suitable for some applications;
   that the DNS server address coexists with a DNS configuration of an original terminal;
   that the DNS server address is invisible to a user or an application;
   that the DNS server address is suitable for some areas or locations;
   that the DNS server address is used for an application edge application that signs a contract with an operator;
   that the DNS server address is used for an edge application;
   that the DNS server address is used for a local data network; and
   that the DNS server address is used for S-NSSAI.

According to a seventh aspect, an information processing method is provided, including:
receiving, by a third communications device, a DNS server address, where the DNS server address carries a mark, where
the mark is used to indicate at least one of the following:
   that the DNS server address is sent by an operator;
   that the DNS server is used for an edge computing scenario;
   that the DNS server address is unable to be changed;
   that the DNS server address is suitable for some applications;
   that the DNS server address coexists with a DNS configuration of an original terminal;
   that the DNS server address is invisible to a user or an application;
   that the DNS server address is suitable for some areas or locations;
   that the DNS server address is used for an application edge application that signs a contract with an operator;
   that the DNS server address is used for an edge application;
   that the DNS server address is used for a local data network; and
   that the DNS server address is used for S-NSSAI.

According to an eighth aspect, an information processing apparatus is provided, including:
a first receiving module, configured to receive a first analysis request, where the first analysis request is used to request analysis of a first domain name system (DNS) query; and
a first sending module, configured to send a first analysis response based on the first analysis request, where
the first analysis response includes at least one of the following:
   related information of a first DNS server; and
   related information of a first application server, where
   the first DNS server is a DNS server corresponding to the first DNS query, and the first application server is an application server corresponding to the first DNS query.

According to a ninth aspect, an information processing apparatus is provided, including:
a second receiving module, configured to receive a second analysis request, where the second analysis request carries an address/addresses of at least one second application server;
a first analyzing module, configured to analyze the at least one second application server, to obtain an analysis result, where the analysis result includes an address of an optimal second application server, or the analysis result includes at least one of a priority of each second application server and service experience of the second application server; and
a second sending module, configured to send the second analysis response, where the second analysis response includes the analysis result, where
the second analysis request is used for requesting at least one of the following:
   obtaining service experience of the second application server in a DNS response;
   determining an optimal second application server among multiple second application servers in the DNS response; and
   determining a priority of each second application server.

According to a tenth aspect, an information processing apparatus is provided, including:
a third sending module, configured to send a first analysis request, where the first analysis request is used to request analysis of a first domain name system (DNS) query; and
a second obtaining module, configured to obtain a first analysis response, where
the first analysis response includes at least one of the following:
   related information of a first DNS server; and
   related information of a first application server, where
   the first DNS server is a DNS server corresponding to the first DNS query, and the first application server is an application server corresponding to the first DNS query.

According to an eleventh aspect, an information processing apparatus is provided, including:
a sixth sending module, configured to send DNS query reference information, where
the DNS query reference information includes at least one of the following:
   address information of a DNS server;
   address information of an application server;
   a mapping relationship between the address information and a location of the DNS server;
   a mapping relationship between an address of the DNS server and an ECS option;
   service experience information of the DNS server; and
   service experience information of the application server.

According to a twelfth aspect, an information processing apparatus is provided, including:
a third obtaining module, configured to obtain a DNS response; and
a third determining module, configured to determine an accessed application server based on the DNS response, where
the DNS response includes address information of a first application server, the first application server is an application server that is corresponding to a first DNS query and that is determined by a first communications device based on a first analysis request, and the first analysis request is used to request analysis of a first domain name system (DNS) query; or
the DNS response includes a priority of each second application server or an address of an optimal second application server, the second application server is an application server included in a first DNS response, and the first DNS response is a query response sent by a first DNS server.

According to a thirteenth aspect, an information processing apparatus is provided, including:
a seventh sending module, configured to send a DNS server address, where the DNS server address carries a mark, where
the mark is used to indicate at least one of the following:
   that the DNS server address is sent by an operator;
   that the DNS server is used for an edge computing scenario;
   that the DNS server address is unable to be changed;
   that the DNS server address is suitable for some applications;
   that the DNS server address coexists with a DNS configuration of an original terminal;
   that the DNS server address is invisible to a user or an application;
   that the DNS server address is suitable for some areas or locations;
   that the DNS server address is used for an application edge application that signs a contract with an operator;
   that the DNS server address is used for an edge application;
   that the DNS server address is used for a local data network; and
   that the DNS server address is used for S-NSSAI.

According to a fourteenth aspect, an information processing apparatus is provided, including:
a third receiving module, configured to receive a DNS server address, where the DNS server address carries a mark, where
the mark is used to indicate at least one of the following:
   that the DNS server address is sent by an operator;
   that the DNS server is used for an edge computing scenario;
   that the DNS server address is unable to be changed;
   that the DNS server address is suitable for some applications;
   that the DNS server address coexists with a DNS configuration of an original terminal;
   that the DNS server address is invisible to a user or an application;
   that the DNS server address is suitable for some areas or locations;
   that the DNS server address is used for an application edge application that signs a contract with an operator;
   that the DNS server address is used for an edge application;
   that the DNS server address is used for a local data network; and
   that the DNS server address is used for S-NSSAI.

According to a fifteenth aspect, a network side device is provided. The network side device is specifically a first communications device or a second communications device, and the network side device includes a processor, a memory, and a program or an instruction stored in the memory and executable on the processor, where when the program or the instruction is executed by the processor, steps of the method according to the first aspect, the second aspect, the third aspect, the fourth aspect, or the sixth aspect are implemented.

According to a sixteenth aspect, a network side device is provided, including a processor and a communications interface, where the network side device is specifically a first communications device or a second communications device, and when the network side device is the first communications device, the communications interface is configured to: receive a first analysis request, where the first analysis request is used to request analysis of a first domain name system (DNS) query; and send a first analysis response based on the first analysis request, where the first analysis response includes at least one of the following:
related information of a first DNS server; and
related information of a first application server, where
the first DNS server is a DNS server corresponding to the first DNS query, and the first application server is an application server corresponding to the first DNS query.

Alternatively, when the network side device is the first communications device, the communications interface is configured to receive a second analysis request, where the second analysis request carries an address/addresses of at least one second application server; the processor is configured to analyze the at least one second application server, to obtain an analysis result, where the analysis result includes an address of an optimal second application server, or the analysis result includes at least one of a priority of each second application server and service experience of the second application server; and the communications interface is configured to send the second analysis response, where the second analysis response includes the analysis result, where
the second analysis request is used for requesting at least one of the following:
obtaining service experience of the second application server in a DNS response;
determining an optimal second application server among multiple second application servers in the DNS response; and
determining a priority of each second application server.

Alternatively, when the network side device is the second communications device, the communications interface is configured to: send a first analysis request, where the first analysis request is used to request analysis of a first domain name system (DNS) query; and obtain a first analysis response, where
the first analysis response includes at least one of the following:
related information of a first DNS server; and
related information of a first application server, where
the first DNS server is a DNS server corresponding to the first DNS query, and the first application server is an application server corresponding to the first DNS query.

Alternatively, when the network side device is the second communications device, the communications interface is configured to send DNS query reference information, where
the DNS query reference information includes at least one of the following:
address information of a DNS server;
address information of an application server;
a mapping relationship between the address information and a location of the DNS server;
a mapping relationship between an address of the DNS server and an ECS option;
service experience information of the DNS server; and
service experience information of the application server.

Alternatively, when the network side device is the second communications device, the communications interface is configured to send a DNS server address, where the DNS server address carries a mark, where
the mark is used to indicate at least one of the following:
that the DNS server address is sent by an operator;
that the DNS server is used for an edge computing scenario;
that the DNS server address is unable to be changed;
that the DNS server address is suitable for some applications;
that the DNS server address coexists with a DNS configuration of an original terminal;
that the DNS server address is invisible to a user or an application;
that the DNS server address is suitable for some areas or locations;
that the DNS server address is used for an application edge application that signs a contract with an operator;
that the DNS server address is used for an edge application;
that the DNS server address is used for a local data network; and
that the DNS server address is used for S-NSSAI.

According to a seventeenth aspect, a third communications device is provided, where the third communications device is a terminal, including a processor, a memory, and a program or an instruction stored in the memory and executable on the processor, and when the program or the instruction is executed by the processor, steps of the method according to the fifth aspect or the seventh aspect are implemented.

According to an eighteenth aspect, a third communications device is provided, where the third communications device is a terminal, including a processor and a communications interface, and the communications interface is configured to obtain a DNS response; and the processor is configured to determine an accessed application server based on the DNS response, where
the DNS response includes address information of a first application server, the first application server is an application server that is corresponding to a first DNS query and that is determined by a first communications device based on a first analysis request, and the first analysis request is used to request analysis of a first domain name system (DNS) query; or
the DNS response includes a priority of each second application server or an address of an optimal second application server, the second application server is an application server included in a first DNS response, and the first DNS response is a query response sent by a first DNS server.

Alternatively, the communications interface is configured to receive a DNS server address, and the DNS server address carries a mark, where
the mark is used to indicate at least one of the following:
that the DNS server address is sent by an operator;
that the DNS server is used for an edge computing scenario;
that the DNS server address is unable to be changed;
that the DNS server address is suitable for some applications;
that the DNS server address coexists with a DNS configuration of an original terminal;
that the DNS server address is invisible to a user or an application;
that the DNS server address is suitable for some areas or locations;
that the DNS server address is used for an application edge application that signs a contract with an operator;
that the DNS server address is used for an edge application;
that the DNS server address is used for a local data network; and
that the DNS server address is used for S-NSSAI.

According to a nineteenth aspect, a chip is provided, where the chip includes a processor and a communications interface, the communications interface is coupled to the processor, and the processor is configured to execute a program or an instruction to implement steps of the method according to the first aspect, the second aspect, the third aspect, the fourth aspect, the fifth aspect, the sixth aspect, or the seventh aspect.

According to a twentieth aspect, a computer program/program product is provided, where the computer program/program product is stored in a non-transitory storage medium, and the program/program product is executed by at least one processor to implement steps of the method according to the first aspect, the second aspect, the third aspect, the fourth aspect, the fifth aspect, the sixth aspect, or the seventh aspect.

According to a twenty-first aspect, an embodiment of this application provides a communications device, configured to perform steps of the method according to the first aspect, the second aspect, the third aspect, the fourth aspect, the fifth aspect, the sixth aspect, or the seventh aspect.

In this embodiment of this application, the first communications device receives the first analysis request, the first analysis request is used to request analysis of the first domain name system (DNS) query, and the first communications device analyzes the first analysis request to obtain the first analysis response. The first analysis response includes at least one of the related information of the first DNS server and the related information of the first application server. The first analysis response is sent to the second communications device, so that the second communications device can determine, based on the first analysis response, the DNS server or the application server corresponding to the first DNS query. In this way, with the assistance of the first communications device, the second communications device can quickly find the corresponding DNS server or application server.

### BRIEF DESCRIPTION OF DRAWINGS

FIG. 1 is a structural diagram of a communications system to which embodiments of this application can be applied;
FIG. 2 is a first schematic flowchart of an information processing method according to an embodiment of this application;
FIG. 3 is a second schematic flowchart of an information processing method according to an embodiment of this application;
FIG. 4 is a third schematic flowchart of an information processing method according to an embodiment of this application;
FIG. 5 is a fourth schematic flowchart of an information processing method according to an embodiment of this application;
FIG. 6 is a fifth schematic flowchart of an information processing method according to an embodiment of this application;
FIG. 7 is a sixth schematic flowchart of an information processing method according to an embodiment of this application;
FIG. 8 is a seventh schematic flowchart of an information processing method according to an embodiment of this application;
FIG. 9 is a schematic interaction diagram of an information processing method according to an embodiment of this application;
FIG. 10 is a first schematic diagram of a module of an information processing apparatus according to an embodiment of this application;
FIG. 11 is a second schematic diagram of a module of an information processing apparatus according to an embodiment of this application;
FIG. 12 is a third schematic diagram of a module of an information processing apparatus according to an embodiment of this application;
FIG. 13 is a fourth schematic diagram of a module of an information processing apparatus according to an embodiment of this application;
FIG. 14 is a fifth schematic diagram of a module of an information processing apparatus according to an embodiment of this application;
FIG. 15 is a sixth schematic diagram of a module of an information processing apparatus according to an embodiment of this application;
FIG. 16 is a seventh schematic diagram of a module of an information processing apparatus according to an embodiment of this application;
FIG. 17 is a structural block diagram of a network side device according to an embodiment of this application;
FIG. 18 is a structural block diagram of a communications device according to an embodiment of this application; and
FIG. 19 is a structural block diagram of a terminal according to an embodiment of this application.

### DESCRIPTION OF EMBODIMENTS

The following clearly describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6th generation (6th Generation, 6G) communications system.

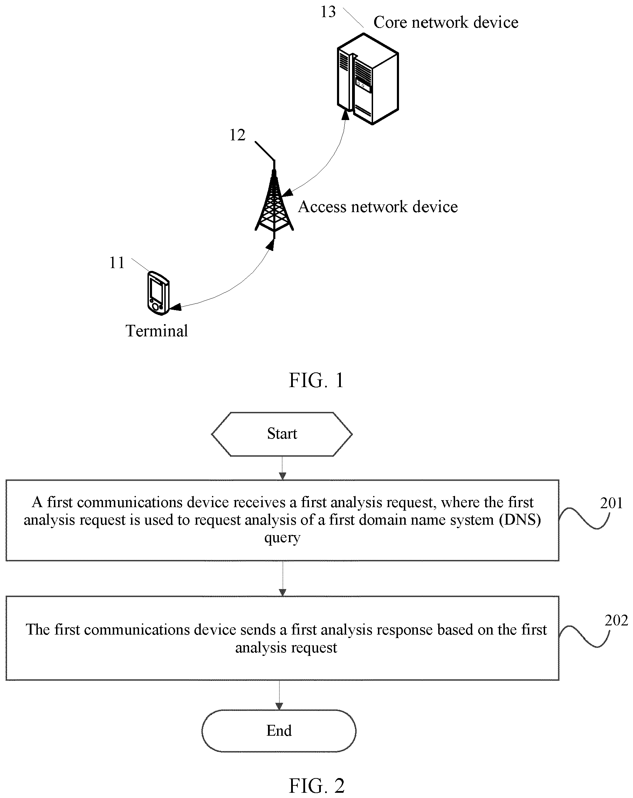

FIG. 1 is a block diagram of a wireless communications system to which embodiments of this application can be applied. The wireless communications system includes a terminal 11, an access network device 12, and a core network device 13. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VLTE), or pedestrian user equipment (PUE). The wearable device includes: a smartwatch, a bracelet, a headset, glasses, and the like. It should be noted that a specific type of the terminal 11 is not limited in the embodiments of this application. The access network device 12 may also be referred to as a radio access network device or a radio access network (Radio Access Network, RAN), and the access network device 12 may be a base station. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a wireless fidelity (Wireless Fidelity, WiFi) node, a transmitting receiving point (Transmitting Receiving Point, TRP), or another appropriate term in the art. As long as the same technical effect is achieved, the base station is not limited to a specific technical term. It should be noted that the base station in the NR system is taken only as an example in the embodiments of this application, but a specific type of the base station is not limited. The core network device 13 may also be referred to as a core network (Core Network, CN) or a 5G core (5G core, 5GC) network. The core network device 13 may include but is not limited to at least one of the following: a core network node, a core network function, a mobility management entity (Mobility Management Entity, MME), an access management function (Access Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), an application function (Application Function, AF), and a network data analytics function (Network Data Analytics Function, NWDAF). It should be noted that, in this embodiment of this application, only the core network device in the 5G system is taken as an example.

The following describes in detail the information processing method provided in the embodiments of this application through some embodiments and application scenarios thereof with reference to the accompanying drawings.

As shown in FIG. 2, an embodiment of this application provides an information processing method, including the following steps.

Step 201: A first communications device receives a first analysis request, where the first analysis request is used to request analysis of a first domain name system (DNS) query.

Step 202: The first communications device sends a first analysis response based on the first analysis request.

The first analysis response includes at least one of the following:
related information of a first DNS server; and
related information of a first application server, where
the first DNS server is a DNS server corresponding to the first DNS query, and the first application server is an application server corresponding to the first DNS query.

Herein, the first DNS server is a DNS server corresponding to the first DNS query, which means that the first DNS query will be sent to the first DNS server; and the first application server is corresponding to the first DNS query, which means that an address of the first application server is used as a first DNS response, and the first DNS response is used to respond to the first DNS query.

In this embodiment of this application, the first analysis response is used to provide at least one of the following:
a first DNS server to which the first DNS query will be routed;
a first application server for responding to the first DNS query; and
experience information of the DNS server.

The first DNS query in this embodiment of this application can also be described as a first DNS query request, a first DNS request, or the like.

The first analysis request is sent by a second communications device, the second communications device is at least one of the SMF and the EASDF, and the first communications device is specifically a network data analysis function (Network Data Analytics Function, NWDAF).

Optionally, the first analysis request includes at least one of the following:
a data network name (Data Network Name, DNN);
single network slice selection assistance information (Single Network Slice Selection Assistance Information, S-NSSAI);
user plane function (User Plane Function, UPF) information (info); an edge application server discovery function (EASDF) IP address;
a data network access identifier (DN Access Identifier, DNAI);
address information of the first application server;
address information of the first DNS server;
an IP address of a terminal; and
a fully qualified domain name (FQDN) in the first DNS query.

In this embodiment of this application, the first analysis request may be Nnwdaf_Analyticslnfo_Request or Nnwdaf_AnalyticsSubscription_Subscribe.

In this embodiment of this application, the first analysis response may be Nnwdaf_Analyticslnfo_Request response or Nnwdaf_AnalyticsSubscription_Notify.

In this embodiment of this application, the UPF info includes a UPF IP address, a UPF ID, UPF URI, and the like.

According to the information processing method in this embodiment of this application, the first communications device receives the first analysis request, the first analysis request is used to request analysis of the first domain name system (DNS) query, and the first communications device analyzes the first analysis request to obtain the first analysis response. The first analysis response includes at least one of the related information of the first DNS server and the related information of the first application server. The first analysis response is sent to the second communications device, so that the second communications device can determine, based on the first analysis response, the DNS server or the application server corresponding to the first DNS query. In this way, with the assistance of the first communications device, the second communications device can quickly find the corresponding DNS server or application server.

Optionally, before the sending a first analysis response, further including:
obtaining DNS query reference information; and
determining the first analysis response based on the DNS query reference information, where
the DNS query reference information includes at least one of the following:
   address information of a DNS server;
   address information of an application server;
   a mapping relationship between the address information and a location of the DNS server;
   a mapping relationship between an address of the DNS server and an evolved DNS client subnet (EDNS Client Subnet, ECS) option;
   service experience information of the DNS server; and
   service experience information of the application server.

It should be noted that the address information in this embodiment of this application may include at least one of an IP address, an FQDN, and a uniform resource identifier (Uniform Resource Identifier, URI). The application server can be specifically an edge application server (Edge Application Server, EAS).

The mapping relationship between the address information and the location of the DNS server means corresponding to the DNS server in a location area, that is, a DNS request initiated in this location area will be sent to a DNS server corresponding to this location area; and
the mapping relationship between the address of the DNS server and the ECS option means initiating a DNS query in a location area, and an ECS option to which the DNS query will be added and the DNS query are sent to a corresponding DNS server.

Optionally, before the obtaining DNS query reference information, further including:
sending a subscription request, where the subscription request is used for requesting to obtain the DNS query reference information.

In this embodiment of this application, the subscription request may be:
Nsmf_EventExposure_Subscribe or Neasdf_EventExposure_Subscribe or Naf_EventExposure_Subscribe.

If a subscription object is the EASDF, the subscription request includes the following parameters: Event ID = Service Experience information, Application ID, Event Filter information, and Target of Event Reporting = any LTE.

Specifically, the subscription request may be sent to the SMF, the EASDF and the AF, so that the SMF, the EASDF, and the AF can return the DNS query reference information based on the subscription request.

The SMF, EASDF, and AF may feed back the subscription request by using a subscription response, and the subscription response may be: Nsmf_EventExposure_Notify or Neasdf_EventExposure_Notify or Naf_EventExposure_Notify.

Optionally, the related information of the first DNS server includes: an address of a default DNS server of an edge application server discovery function (EASDF); or
the related information of the first DNS server includes at least one of an address of a local DNS server and service experience information of the local DNS server; or
the related information of the first DNS server includes at least one of an ECS option corresponding to a central DNS server, an address of the central DNS server, and service experience information of the central DNS server.

In a specific embodiment of this application, the first communications device can assist the EASDF or the SMF to configure a default DNS server. Specifically, after establishing a session for the UE, the SMF may select an EASDF for the UE. After selection, the SMF may establish DNS context for the UE in the EASDF, and the SMF may further configure a default DNS server for the EASDF as a default configuration. An optional configuration manner is: the SMF may request the NWDAF to provide a default DNS server for the EASDF. A specific request method is: the SMF uses EASDF IP, DNN, S-NSSAI, DNAI, UPF info, and the like to initiate the first analysis request. The NWDAF feeds back a DNS server as a result through the first analysis response. Another optional configuration manner is: the SMF itself finds multiple L-DNSes (the multiple L-DNSes are used as candidate L-DNSes) based on a location of the EASDF, a DNAL UE location, and the like, but the SMF doesn't know which one is the best, so the SMF sends IP addresses of these L-DNS servers to the NWDAF through an analysis request, to see which L-DNS will be recommended by the NWDAF, or to determine whether an L-DNS recommended by the NWDAF matches the candidate L-DNS found by the SMF. The NWDAF may also provide a priority list corresponding to a priority of each L-DNS, and the SMF selects a default DNS server based on information returned by the NWDAF. There is another optional implementation: the SMF has selected a DNS server for the EASDF, but doesn't know performance of this DNS server. Therefore, the SMF sends IP, DNN, S-NSSAI, DNAI, UPF info, DNS server IP, and the like of the EASDF to the NWDAF by using the first analysis request, and the NWDAF feeds back service experience of a DNS server. The service experience is service experience of using the DNS server for querying, such as querying a delay. The SMF determines whether to use the selected DNS server as the default DNS server based on the returned service experience.

Optionally, the related information of the first application server includes at least one of the following items:
item 1: an address/addresses of at least one first application server;
item 2: a priority/priorities of at least one first application server; and
item 3: an address of a first application server recommended by the first communications device, where the address of the first application server recommended by the first communications device serves as the first DNS response.

For the item 3, when the first analysis request includes a C-DNS address, the first communications device can directly send the recommended address of the first application server to the terminal.

Further, optionally, the service experience information of the DNS server includes at least one of a query response time, an uplink rate, a downlink rate, and a DNS resolution time.

Herein, the query response time refers to a time from the terminal sending a DNS query to the terminal receiving a DNS response; or a time from the second communications device sending the DNS query to the second communications device receiving the DNS response. The query response time may also be described as a query time.

The DNS resolution time refers to a time required for the DNS server to resolve the DNS query, and the DNS resolution time may also be described as a resolution time.

Further, optionally, the service experience information of the application server includes at least one of the following:
a server response time;
a packet delay;
a packet loss rate;
an uplink communication rate;
a downlink communication rate;
a number of data packets; and
a number of packets retransmitted.

According to the information processing method in this embodiment of this application, the first communications device receives the first analysis request, the first analysis request is used to request analysis of the first domain name system (DNS) query, and the first communications device analyzes the first analysis request to obtain the first analysis response. The first analysis response includes at least one of the related information of the first DNS server and the related information of the first application server. The first analysis response is sent to the second communications device, so that the second communications device can determine, based on the first analysis response, the DNS server or the application server corresponding to the first DNS query. In this way, with the assistance of the first communications device, the second communications device can provide a DNS server or an application server with better performance based on historical statistical information or artificial intelligence.

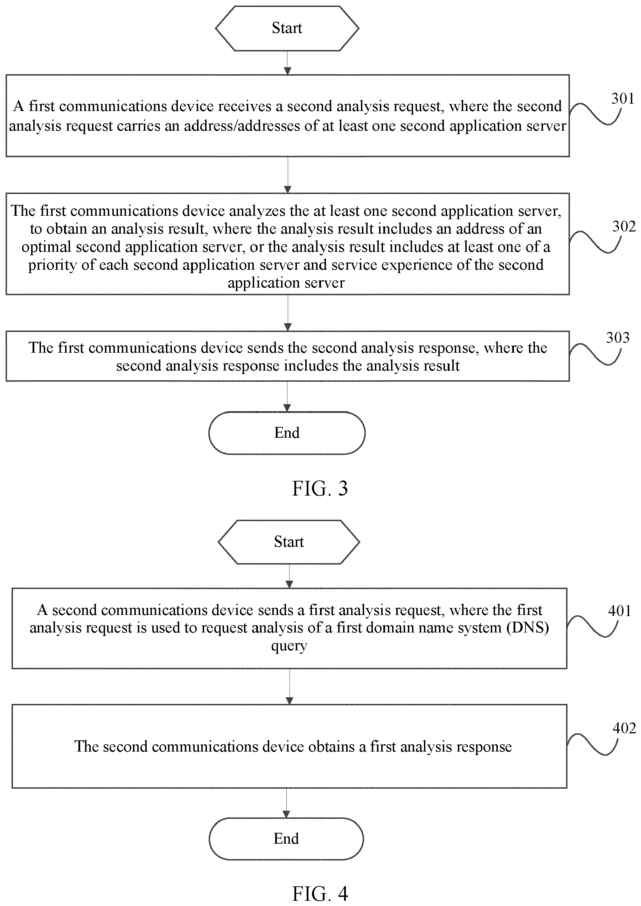

As shown in FIG. 3, an embodiment of this application provides an information processing method, including the following steps.

Step 301: A first communications device receives a second analysis request, where the second analysis request carries an address/addresses of at least one second application server.

The second analysis request is used for requesting at least one of the following:
obtaining service experience of the second application server in a DNS response;
determining an optimal second application server among multiple second application servers in the DNS response; and
determining a priority of each second application server.

The second analysis request is sent by a second communications device, the second communications device is at least one of the SMF and the EASDF, and the first communications device is specifically an NWDAF.

In this embodiment of this application, the second analysis request may be Nnwdaf_AnalyticsInfo_Request or Nnwdaf_ AnalyticsSubscription_Subscribe.

The optimal second application server may refer to a second application server with a shortest delay, a highest rate, a least packet loss and/or a smallest delay, that is, the optimal second application server is a second application server with best service experience.

Step 302: The first communications device analyzes the at least one second application server, to obtain an analysis result, where the analysis result includes an address of an optimal second application server, or the analysis result includes at least one of a priority of each second application server and service experience of the second application server.

Step 303: The first communications device sends the second analysis response, where the second analysis response includes the analysis result.

In this embodiment of this application, the second analysis response may be Nnwdaf_Analyticslnfo_Request response or Nnwdaf_AnalyticsSubscriptionNotify.

Herein, after obtaining the second analysis response, the first communications device sends the second analysis response to the second communications device, so that the second communications device sends, based on the second analysis response, a second DNS response to the terminal, where the second DNS response includes the address of the optimal second application server, or the analysis result includes the priority of each second application server.

According to the information processing method in this embodiment of this application, the first communications device receives the second analysis request; and analyzes the at least one second application server in the second analysis request, to obtain the analysis result, and sends the second analysis response carrying the analysis result to the second communications device, so that the second communications device can determine information related to the application server in the DNS response, such as the address or priority of the application server, and further facilitating the terminal to quickly find the application server for DNS query.

Optionally, the analyzing, by the first communications device, the at least one second application server, to obtain an analysis result includes:
obtaining, by the first communications device, DNS query reference information, where the DNS query reference information includes at least one of address information of an application server and service experience information of the application server; and
analyzing, by the first communications device, the at least one second application server based on the DNS query reference information, to obtain an analysis result.

Optionally, before the obtaining, by the first communications device, DNS query reference information, further including:
sending, by the first communications device, a subscription request, where the subscription request is used for requesting to obtain the DNS query reference information.

In this embodiment of this application, the subscription request may be: Nsmf_EventExposure_Subscribe or Neasdf_EventExposure_Subscribe or Naf_EventExposure_Subscribe.

If a subscription object is the EASDF, the following parameters are included: Event ID = Service Experience information, Application ID, Event Filter information, Target of Event Reporting = Any UE

Specifically, the subscription request may be sent to the SMF, the EASDF, and the AF, so that the SMF, the EASDF, and the AF can return the DNS query reference information based on the subscription request.

The SMF, EASDF, and AF may feed back the subscription request by using a subscription response, and the subscription response may be: Nsmf_EventExposure Notify or Neasdf_EventExposure_Notify or Naf_EventExposure_Notify.

Optionally, the DNS query reference information further includes at least one of the following:
address information of a DNS server;
a mapping relationship between the address information and a location of the DNS server;
a mapping relationship between an address of the DNS server and an ECS option; and
service experience information of the DNS server.

It should be noted that the address information in this embodiment of this application may include at least one of an IP address, an FQDN, and a uniform resource identifier (Uniform Resource Identifier, URI).

The mapping relationship between the address information and the location of the DNS server means corresponding to the DNS server in a location area, that is, a DNS request initiated in this location area will be sent to a DNS server corresponding to this location area; and
the mapping relationship between the address of the DNS server and the ECS option means initiating a DNS query in a location area, and an ECS option to which the DNS query will be added and the DNS query are sent to a corresponding DNS server.

In this embodiment of this application, the NWDAF can assist the SMF to provide reference for the EASDF with necessary information (for the DNS query). When establishing DNS context for the UE, the SMF may send DNS handling rules to the EASDF at the same time, that is, the rules are to guide the EASDF how to handle it after receiving the DNS query or the DNS response (for example, should it be sent to C-DNS+ECS option or L-DNS after receiving the DNS query; and whether the DNS response result should be forwarded to the SMF after receiving the DNS response).

The following describes a learning process and an analysis output process of the NWDAF.

### Learning process:

The first is initial learning. That is, the SMF and the EASDF report information related to the DNS query to the NWDAF. The SMF and the EASDF may report relevant DNS query information to the NWDAF, and the NWDAF stores the information as DNS query reference information:
1. the EASDF and the SMF send C-DNS+ECS option, UE location information, DNN, S-NSSAL DNAI, UPF info, and the like to the NWDAF; and in this way, the NWDAF remembers C-DNS and ECS option corresponding to some LTE locations, and maintains this mapping;
2. the EASDF and the SMF send L-DNS and UE location information, DNN, S-NSSAI, DNAL UPF info, and the like to the NWDAF; and in this way, the NWDAF remembers L-DNS corresponding to some UE locations, and maintains this mapping relationship; and
3. the EASDF and the SMF may send service experience information for querying each C-DNS or L-DNS to the NWDAF, such as a query time.

The foregoing process can be considered as a learning process of the NWDAF. The NWDAF records and learns C-DNS+ECS option and L-DNS at a specific location based on the DNS query sent by the UE at a specific location.

### Analysis output process:

Output process: the SMF or the EASDF sends the DNS query and related information to the NWDAF, and the NWDAF analyzes and processes them based on previous learning experience or statistics.
1. The SMF or the EASDF sends a UE location, UPF information, DNAI, DNS server, and the like to the NWDAF in a manner of analysis request, and the NWDAF returns only an experience value of accessing the DNS server, that is, experience of accessing this DNS server (for example, service experience is 1); and the SMF or the EASDF may send the analysis request for several times to obtain experience of different DNS servers, and then the SMF and the EASDF decide a DNS server with best experience based on many times of analysis.
2. The SMF or the EASDF sends a UE location, UPF information, DNAI, multiple DNS server IP addresses, and the like to the NWDAF in a manner of analysis request, and the NWDAF feeds back an optimal DNS server from multiple DNS server addresses based on the analysis, that is, the NWDAF assists the SMF or the EASDF to select an optimal DNS server from multiple DNS servers. This DNS server has the best experience.
3. The SMF or the EASDF sends a UE location, UPF information, DNAI, DNS query, and the like to the NWDAF in a manner of analysis request, and the NWDAF feeds back C-DNS+ECS option or L-DNS based on these pieces of information; and it is equivalent to assisting the SMF to decide, based on the LTE location, how to forward the DNS query, for example, forwarding to C-DNS or L-DNS.
4. The SMF or the EASDF sends a UE location, UPF information, DNAI, DNS query, and the like to the NWDAF in a manner of analysis request. In a case of C-DNS, because a query result corresponding to the C-DNS is relatively fixed, the NWDAF may directly provide, based on historical statistics or analysis, a parsed edge application server (Edge Application Server, EAS) IP to the SMF or the EASDF to respond to the DNS query. In this way, the SMF/EASDF directly replies the DNS response to the UE without sending the DNS query to the DNS server. Therefore, the UE location needs to be associated with the C-DNS.

Further, in this embodiment of this application, the NWDAF may further sort, based on the priority, addresses of multiple application servers fed back by the DNS response.

Specifically, in the current DNS mechanism, the DNS responses usually return multiple EAS IP results, that is, multiple server IP addresses are used as DNS responses, which is mainly for load balance. Then, the UE may randomly use one of the IP addresses as an IP connection. In this embodiment of this application, if the DNS response provides multiple EAS IP addresses, the NWDAF may sort these EAS IP addresses based on a record of previous UE communication or performance statistics, and provide a priority. For example, a history of EAS IP address 1 shows best performance, which can be fed back to a UE side.

According to the information processing method in this embodiment of this application, the first communications device can assist, based on the DNS query reference information, the second communications device to determine an application server with better performance to respond to the DNS query, so that the first communications device can be used to quickly match an appropriate application server.

As shown in FIG. 4, an embodiment of this application further provides an information processing method, including the following steps.

Step 401: A second communications device sends a first analysis request, where the first analysis request is used to request analysis of a first domain name system (DNS) query.

In this step, the second communications device sends the first analysis request to the first communications device, the second communications device is at least one of the SMF and the EASDF, and the first communications device is an NWDAF.

Optionally, the first analysis request includes at least one of the following:
a data network name;
single network slice selection assistance information;
user plane function information;
an edge application server discovery function;
a data network access identifier;
address information of the first application server;
address information of the first DNS server;
an IP address of a terminal; and
a fully qualified domain name (FQDN) in the first DNS query.

Step 402: The second communications device obtains a first analysis response.

The first analysis response is an analysis response returned by the first communications device based on the first analysis request.

The first analysis response includes at least one of the following:
related information of a first DNS server; and
related information of a first application server, where
the first DNS server is a DNS server corresponding to the first DNS query, and the first application server is an application server corresponding to the first DNS query.

Herein, the first DNS server is a DNS server corresponding to the first DNS query, which means that the first DNS query will be sent to the first DNS server; and the first application server is corresponding to the first DNS query, which means that an address of the first application server is used as a first DNS response, and the first DNS response is used to respond to the first DNS query.

According to the information processing method in this embodiment of this application, the second communications device sends a first analysis request, where the first analysis request is used to request analysis of a first domain name system (DNS) query; and the second communications device obtains a first analysis response returned by the first communications device based on the first analysis request, so that the second communications device can determine, based on the first analysis response, the DNS server or the application server corresponding to the first DNS query. In this way, with the assistance of the first communications device, the second communications device can quickly find the corresponding DNS server or application server.

It should be noted that the first analysis request in this embodiment of this application is the same as the first analysis request in the foregoing embodiment, and the first analysis response in this embodiment of this application is the same as the first analysis response in the foregoing embodiment. Details are not described herein again.

As an optional implementation, after the obtaining a first analysis response, further including:
determining the first DNS server based on the first analysis response; and
sending the first DNS query to the first DNS server.

Further, after the sending the first DNS query to the first DNS server, further including:
obtaining a first DNS response, where the first DNS response includes an address/addresses of at least one second application server;
sending a second analysis request based on the first DNS response, where the second analysis request carries an address/addresses of at least one second application server; and
obtaining a second analysis response, where the second analysis response includes an address of an optimal second application server, or the second analysis response includes at least one of a priority of each second application server and service experience of the second application server, where
the second analysis request is used for requesting at least one of the following:
   obtaining service experience of the second application server in the first DNS response;
   determining the optimal second application server among multiple second application servers in the first DNS response; and
   determining a priority of each second application server.

The second analysis request in this embodiment of this application is the same as the second analysis request in the foregoing embodiment, and details are not described herein again.

Optionally, after the obtaining a second analysis response, further including:
sending a second DNS response, where the second DNS response includes the address of the optimal second application server, or the analysis result includes the priority of each second application server.

In this implementation, after the first DNS server is determined, and the first DNS query is sent to the first DNS server, the first DNS response returned by the first DNS server is obtained, where the first DNS response includes an address/addresses of at least one second application server; and the second analysis request is sent to the first communications device based on the first DNS response, to request for obtaining service experience of the second applications server in the first DNS response, the optimal second application server is determined among multiple second application servers in the first DNS response, and/or the priority of each second application server is determined, and the second DNS response is sent based on the second analysis response.

As another optional implementation, after the obtaining a first analysis response, further including:
sending a third DNS response, where the third DNS response includes address information of the first application server.

This implementation is suitable for the case that the first DNS server is the C-DNS. Because the query result corresponding to the C-DNS is relatively fixed, the first application server in the first analysis request is directly provided as the terminal.

Optionally, the related information of the first DNS server includes: an address of a default DNS server of an edge application server discovery function (EASDF); or
the related information of the first DNS server includes at least one of an address of a local DNS server and service experience information of the local DNS server; or
the related information of the first DNS server includes at least one of an ECS option corresponding to a central DNS server, an address of the central DNS server, and service experience information of the central DNS server.

Optionally, the related information of the first application server includes at least one of the following items:
an address/addresses of at least one first application server;
a priority/priorities of at least one first application server; and
an address of a first application server recommended by the first communications device.

It should be noted that the related information of the first DNS server and the related information of the first application server have been described in the foregoing embodiment, and details are not described herein again.

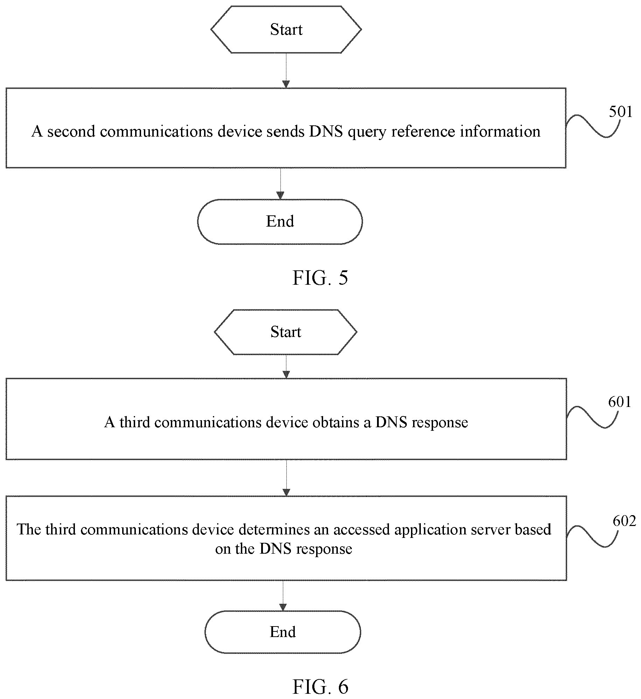

As shown in FIG. 5, an embodiment of this application further provides an information processing method, including the following steps.

Step 501: A second communications device sends DNS query reference information.

The DNS query reference information includes at least one of the following:
address information of a DNS server;
address information of an application server;
a mapping relationship between the address information and a location of the DNS server;
a mapping relationship between an address of the DNS server and an ECS option;
service experience information of the DNS server; and
service experience information of the application server.

The DNS query reference information is sent by the second communications device based on the subscription request sent by the first communications device. The DNS query reference information has been described in detail in the foregoing embodiment, and will not be described herein again.

According to the information processing method in this embodiment of this application, the second communications device sends the DNS query reference information to the first communications device, so that the first communications device assists, based on the DNS query reference information, the second communications device to determine the server (at least one of the DNS server and the application server) corresponding to the first DNS query, thereby enabling the first communications device to quickly find a server with better performance.

As shown in FIG. 6, an embodiment of this application further provides an information processing method, including the following steps.

Step 601: A third communications device obtains a DNS response.

Step 602: The third communications device determines an accessed application server based on the DNS response.

The DNS response includes address information of a first application server, the first application server is an application server that is corresponding to a first DNS query and that is determined by a first communications device based on a first analysis request, and the first analysis request is used to request analysis of a first domain name system (DNS) query; or
the DNS response includes a priority of each second application server or an address of an optimal second application server, the second application server is an application server included in a first DNS response, and the first DNS response is a query response sent by a first DNS server.

In this embodiment of this application, the third communications device may be a terminal, and the DNS response may be the address information of the first application server returned by the first communications device, or the priority of each second application server or the address of the optimal second application server returned by the second communications device.

In this embodiment of this application, the third communications device obtains the DNS response, where the DNS response is obtained after the first communications device analyzes and processes the DNS query reference information based on the first analysis request or the second analysis request. In this way, with the assistance of the first communications device, it is convenient for the third communications device to quickly access a corresponding server.

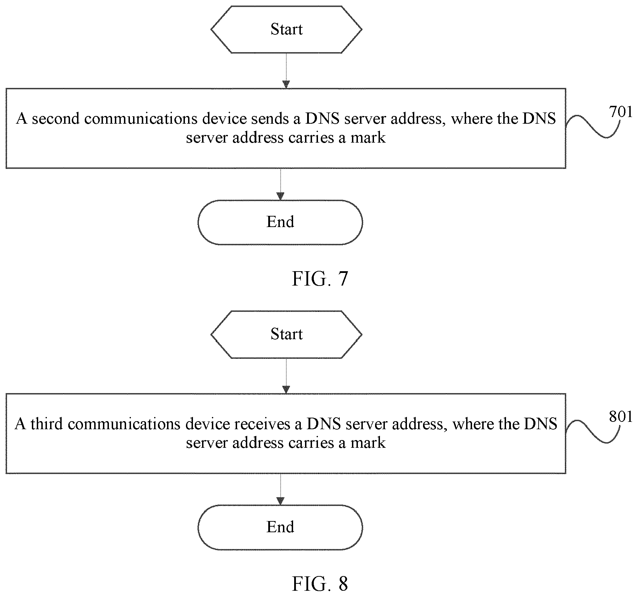

As shown in FIG. 7, an embodiment of this application further provides an information processing method, including the following steps.

Step 701: A second communications device sends a DNS server address, where the DNS server address carries a mark.

The mark is used to indicate at least one of the following:
that the DNS server address is sent by an operator;
that the DNS server is used for an edge computing scenario;
that the DNS server address is unable to be changed;
that the DNS server address is suitable for some applications;
that the DNS server address coexists with a DNS configuration of an original terminal;
that the DNS server address is invisible to a user or an application;
that the DNS server address is suitable for some areas or locations;
that the DNS server address is used for an application edge application that signs a contract with an operator;
that the DNS server address is used for an edge application;
that the DNS server address is used for a local data network; and
that the DNS server address is used for S-NSSAI.

The second communications device is at least one of the SMF and the EASDF.

According to the information processing method in this embodiment of this application, the second communications device sends the DNS server address and marks the DNS server address, thereby facilitating the third communications device to accurately learn of the related information of the DNS server address and make specific distinction.

As shown in FIG. 8, an embodiment of this application further provides an information processing method, including:
receiving, by a third communications device, a DNS server address, where the DNS server address carries a mark, where
the mark is used to indicate at least one of the following:
   that the DNS server address is sent by an operator;
   that the DNS server is used for an edge computing scenario;
   that the DNS server address is unable to be changed;
   that the DNS server address is suitable for some applications;
   that the DNS server address coexists with a DNS configuration of an original terminal;
   that the DNS server address is invisible to a user or an application;
   that the DNS server address is suitable for some areas or locations;
   that the DNS server address is used for an application edge application that signs a contract with an operator;
   that the DNS server address is used for an edge application;
   that the DNS server address is used for a local data network; and
   that the DNS server address is used for S-NSSAI.

The third communications device may be a terminal.

According to the information processing method in this embodiment of this application, the third communications device receives the DNS server address, and can accurately learn of the related information of the DNS server address based on the mark of the DNS server address and make specific distinction.

The following describes the information processing method in this application with reference to specific embodiments.

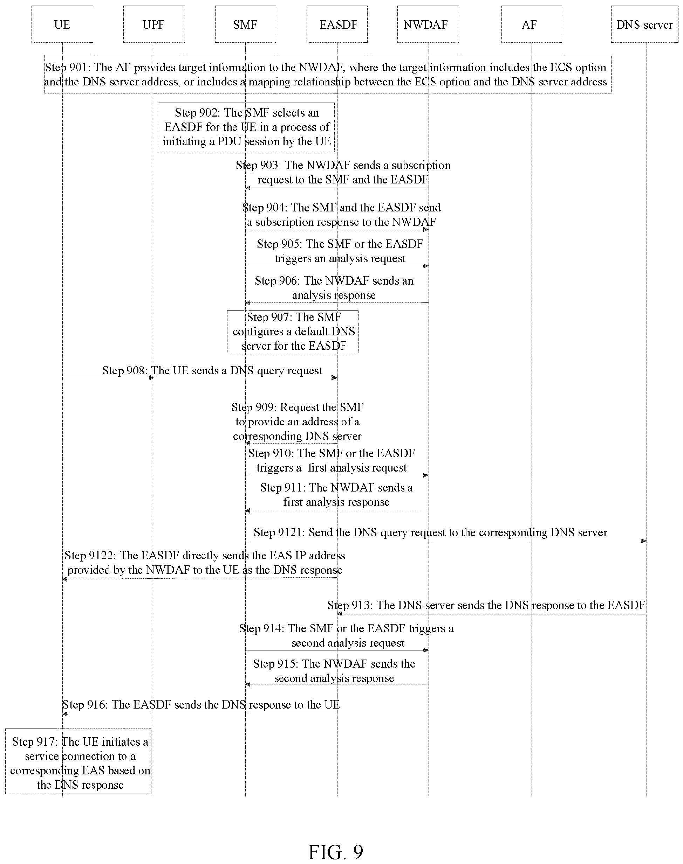

As shown in FIG. 9, the following steps are included.

Step 901: The AF provides target information to the NWDAF, where the target information includes the ECS option and the DNS server address, or includes a mapping relationship between the ECS option and the DNS server address.

Step 902: The SMF selects an EASDF for the LTE in a process of initiating a PDU session by the UE.

Step 903: The NWDAF sends a subscription request to the SMF, the EASDF and the AF.

The subscription request includes at least one of the following representations:
Nsmf_EventExposure_Subscribe or
Neasdf_EventExposure_Subscribe or
Naf_EventExposure_Subscribe.

The subscription request is used to collect the DNS query reference information from the SMF or the EASDF or the AF, such as experience of a DNS query; a DNS server or an ECS option used under a UE address; and a response of a DNS query, where the response includes an EAS IP address.

Step 904: The SMF, the EASDF, or the AF sends a subscription response to the NWDAF, where the subscription response includes the DNS query reference information.

The SMF, EASDF, and AF may feed back the subscription request by using a subscription response, and the subscription response may be: Nsmf_EventExposure_Notify or Neasdf_EventExposure_Notify or Naf_EventExposure_Notify.

Step 905: The SMF or the EASDF triggers an analysis request.

The analysis request is used to provide a default DNS server for the EASDF, and serves as a DNS default configuration.

Specifically, the analysis request is Nnwdaf_Analyticslnfo_Request or Nnwdaf_AnalyticsSubscription_Sub scribe.

Step 906: The NWDAF sends an analysis response.

Specifically, the analysis request is Nnwdaf_Analyticslnfo_Request response or Nnwdaf_AnalyticsSubscription_Notify.

The analysis response includes the address of the DNS server, and a DNS corresponding to the address of the DNS server is used as the default DNS server by the EASDF.

Step 907: The SMF configures the default DNS server for the EASDF.

Optionally, the default DNS server can be configured for the EASDF by using the following signaling:
Neasdf_DNSContext_Create; and
Neasdf_DNSContext_Update.

Step 908: The UE sends a DNS query request.

Step 909: After the EASDF receives the DNS query request, because the SMF has sent an FQDN-based processing method (DNS handling rule) for the EASDF, the EASDF can determine whether to send the DNS query request to the C-DNS or the L-DNS based on the FQDN, and then request the SMF to provide an address of a corresponding DNS server based on a determination result.

Specifically, when the DNS query request is sent to the C-DNS, it is requested to provide the address of the C-DNS and a corresponding ECS option, and when the DNS query request is sent to the L-DNS, it is requested to provide the address of the L-DNS.

Step 910: The SMF or the EASDF triggers an analysis request, and the analysis request is the foregoing first analysis request.

The analysis request is Nnwdaf_Analyticslnfo_Request or Nnwdaf_AnalyticsSubscription_Subscribe.

Step 911: After analysis, or using parameters in the analysis request as a filter, the NWDAF queries from historical statistical data to obtain the analysis response, that is, the first analysis response.

The analysis response is Nnwdaf_Analyticslnfo_Request response or Nnwdaf_AnalyticsSubscription_Notify.

Step 9121: The SMF or the EASDF refers to the information provided by the NWDAF, then determines the corresponding DNS server and sends the DNS query request to the corresponding DNS server.

Step 9122: The EASDF directly sends the EAS IP address provided by the NWDAF to the UE as the DNS response, and jumps to step 918.

Step 9122 and step 9121 are in parallel.

Step 913: The DNS server sends the DNS response to the EASDF, and the DNS response may include multiple EAS IP addresses due to load balance.

Step 914: The EASDF or the SMF sends multiple EAS IP addresses in the DNS response to the NWDAF in a manner of analysis request, and requests the NWDAF to provide an analysis result, that is, to send the second analysis request.

Herein, the EASDF may directly send the second analysis request, or forward the DNS response to the SMF first, and the SMF sends the second analysis request.

The analysis request is Nnwdaf_Analyticslnfo_Request or Nnwdaf_AnalyticsSubscription_Subscribe.

Step 915: After receiving the analysis request, the NWDAF analyzes multiple EAS IPs to find out which one has the best performance; or checks, based on the historical statistics or behavior analysis of the UE, or the statistical information in the NWDAF, which EAS IP has best communications performance. The EASDF or the SMF is replied by using an analyzing and response method, that is, sending the second analysis response.

The analysis response is Nnwdaf_Analyticslnfo_Request response or Nnwdaf_AnalyticsSubscription_Notify.

Step 916: The EASDF sends the DNS response to the UE, where the DNS response may indicate the optimal EAS IP if it includes multiple EASIP addresses.

Step 917: The UE initiates a service connection to a corresponding EAS based on the DNS response.

Specifically, after the UE receives the DNS response, if the response includes multiple EAS IPs, the UE can select an optimal IP address based on the priority of each address, and initiate a service connection.

According to the information processing method in this embodiment of this application, the first communications device receives the first analysis request, the first analysis request is used to request analysis of the first domain name system (DNS) query, and the first communications device analyzes the first analysis request to obtain the first analysis response. The first analysis response includes at least one of the related information of the first DNS server and the related information of the first application server. The first analysis response is sent to the second communications device, so that the second communications device can determine, based on the first analysis response, the DNS server or the application server corresponding to the first DNS query. In this way, with the assistance of the first communications device, the second communications device can quickly find the corresponding DNS server or application server.

It should be noted that, the information processing method provided in the embodiments of this application may be executed by an information processing apparatus, or a control module in the information processing apparatus for executing the information processing method. In the embodiments of this application, that the information processing apparatus performs the information processing method is used as an example to describe the information processing apparatus provided in the embodiments of this application.

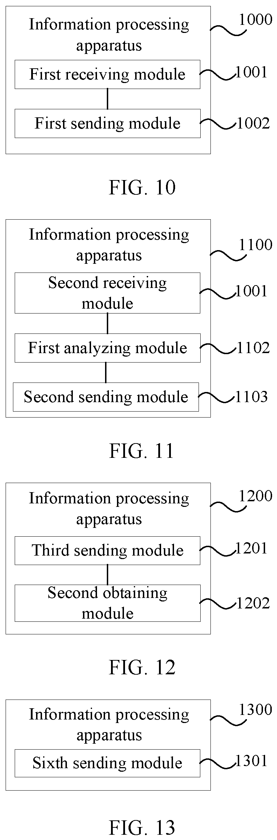

As shown in FIG. 10, an embodiment of this application provides an information processing apparatus 1000, including:
a first receiving module 1001, configured to receive a first analysis request, where the first analysis request is used to request analysis of a first domain name system (DNS) query; and
a first sending module 1002, configured to send a first analysis response based on the first analysis request, where
the first analysis response includes at least one of the following:
   related information of a first DNS server; and
   related information of a first application server, where
   the first DNS server is a DNS server corresponding to the first DNS query, and the first application server is an application server corresponding to the first DNS query.

Optionally, the apparatus in this embodiment of this application further includes:
a first obtaining module, configured to: before the first sending module sends the first analysis response, obtain DNS query reference information; and
a first determining module, configured to determine the first analysis response based on the DNS query reference information, where
the DNS query reference information includes at least one of the following:
   address information of a DNS server;
   address information of an application server;
   a mapping relationship between the address information and a location of the DNS server;
   a mapping relationship between an address of the DNS server and an evolved DNS client subnet option (ECS option);
   service experience information of the DNS server; and
   service experience information of the application server.

Optionally, the apparatus in this embodiment of this application further includes:
an eighth sending module, configured to send a subscription request, where the subscription request is used for requesting to obtain the DNS query reference information.

Optionally, the related information of the first DNS server includes: an address of a default DNS server of an edge application server discovery function (EASDF); or
the related information of the first DNS server includes at least one of an address of a local DNS server and service experience information of the local DNS server; or
the related information of the first DNS server includes at least one of an ECS option corresponding to a central DNS server, an address of the central DNS server, and service experience information of the central DNS server.

Optionally, the related information of the first application server includes at least one of the following items:
an address/addresses of at least one first application server;
a priority/priorities of at least one first application server; and
an address of a first application server recommended by the first communications device.

Optionally, the service experience information of the DNS server includes at least one of a query response time, an uplink rate, a downlink rate, and a DNS resolution time.

Optionally, the service experience information of the application server includes at least one of the following:
a server response time;
a packet delay;
a packet loss rate;
an uplink communication rate;
a downlink communication rate;
a number of data packets; and
a number of packets retransmitted.

Optionally, the first analysis request includes at least one of the following:
a data network name (DNN);
single network slice selection assistance information (S-NSSAI);
user plane function (UPF) information;
an edge application server discovery function (EASDF) IP address;
a data network access identifier (DNAI);
address information of the first application server;
address information of the first DNS server;
an IP address of a terminal; and
a fully qualified domain name (FQDN) in the first DNS query.

In this embodiment of this application, the apparatus receives the first analysis request, the first analysis request is used to request analysis of the first domain name system (DNS) query, and the apparatus analyzes the first analysis request to obtain the first analysis response. The first analysis response includes at least one of the related information of the first DNS server and the related information of the first application server. The first analysis response is sent to the second communications device, so that the second communications device can determine, based on the first analysis response, the DNS server or the application server corresponding to the first DNS query. In this way, with the assistance of the first communications device, the second communications device can quickly find the corresponding DNS server or application server.

The apparatus provided in this embodiment of this application can implement the processes implemented in the method embodiment of FIG. 2, and a same technical effect can be achieved. To avoid repetition, details are not described herein again.

As shown in FIG. 11, an embodiment of this application further provides an information processing apparatus 1100, including:
a second receiving module 1101, configured to receive a second analysis request, where the second analysis request carries an address/addresses of at least one second application server;
a first analyzing module 1102, configured to analyze the at least one second application server, to obtain an analysis result, where the analysis result includes an address of an optimal second application server, or the analysis result includes at least one of a priority of each second application server and service experience of the second application server; and
a second sending module 1103, configured to send the second analysis response, where the second analysis response includes the analysis result, where
the second analysis request is used for requesting at least one of the following:
   obtaining service experience of the second application server in a DNS response;
   determining an optimal second application server among multiple second application servers in the DNS response; and
   determining a priority of each second application server.

Optionally, the first analyzing module includes:
a first obtaining submodule, configured to obtain DNS query reference information, where the DNS query reference information includes at least one of address information of an application server and service experience information of the application server; and
a first analyzing submodule, configured to analyze the at least one second application server based on the DNS query reference information, to obtain an analysis result.

Optionally, the apparatus in this embodiment of this application, that is, the first analyzing module further includes:
a first sending submodule, configured to: before obtaining the DNS query reference information, send a subscription request, where the subscription request is used for requesting to obtain the DNS query reference information.

The apparatus provided in this embodiment of this application can implement the processes implemented in the method embodiment of FIG. 3, and a same technical effect can be achieved. To avoid repetition, details are not described herein again.

In this embodiment of this application, the second analysis request is received; and the at least one second application server in the second analysis request is analyzed to obtain the analysis result, and the second analysis response carrying the analysis result is sent to the second communications device, so that the second communications device can determine information related to the application server in the DNS response, such as the address or priority of the application server, and further facilitating the terminal to quickly find the application server for DNS query.

As shown in FIG. 12, an embodiment of this application further provides an information processing apparatus 1200, including:
a third sending module 1201, configured to send a first analysis request, where the first analysis request is used to request analysis of a first domain name system (DNS) query; and
a second obtaining module 1202, configured to obtain a first analysis response, where
the first analysis response includes at least one of the following:
   related information of a first DNS server; and
   related information of a first application server, where
   the first DNS server is a DNS server corresponding to the first DNS query, and the first application server is an application server corresponding to the first DNS query.

Optionally, the apparatus in this embodiment of this application further includes:
a second determining module, configured to: after the second obtaining module obtains the first analysis response, determine the first DNS server based on the first analysis response; and
a fourth sending module, configured to send the first DNS query to the first DNS server.

Optionally, the apparatus in this embodiment of this application further includes:
a fourth obtaining module, configured to: after the fourth sending module sends the first DNS query to the first DNS server, obtain a first DNS response, where the first DNS response includes an address/addresses of at least one second application server;
a ninth sending module, configured to send a second analysis request based on the first DNS response, where the second analysis request carries an address/addresses of at least one second application server; and
a fifth obtaining module, configured to obtain a second analysis response, where the second analysis response includes an address of an optimal second application server, or the second analysis response includes at least one of a priority of each second application server and service experience of the second application server, where
the second analysis request is used for requesting at least one of the following:
   obtaining service experience of the second application server in the first DNS response;
   determining the optimal second application server among multiple second application servers in the first DNS response; and
   determining a priority of each second application server.

Optionally, the apparatus in this embodiment of this application further includes:
a tenth sending module, configured to: after the fifth obtaining module obtains the second analysis response, send a second DNS response, where the second DNS response includes the address of the optimal second application server, or the analysis result includes the priority of each second application server.

Optionally, the apparatus in this embodiment of this application further includes:
a fifth sending module, configured to: after the second obtaining module obtains the first analysis response, send a third DNS response, where the third DNS response includes address information of the first application server.

Optionally, the related information of the first DNS server includes: an address of a default DNS server of an edge application server discovery function (EASDF); or
the related information of the first DNS server includes at least one of an address of a local DNS server and service experience information of the local DNS server; or
the related information of the first DNS server includes at least one of an ECS option corresponding to a central DNS server, an address of the central DNS server, and service experience information of the central DNS server.

Optionally, the related information of the first application server includes at least one of the following items:
an address/addresses of at least one first application server;
a priority/priorities of at least one first application server; and
an address of a first application server recommended by the first communications device.

The apparatus provided in this embodiment of this application can implement the processes implemented in the method embodiment of FIG. 4, and a same technical effect can be achieved. To avoid repetition, details are not described herein again.

In this embodiment of this application, the information processing apparatus sends a first analysis request, where the first analysis request is used to request analysis of a first domain name system (DNS) query; and the apparatus obtains a first analysis response returned by the first communications device based on the first analysis request, so that the apparatus can determine, based on the first analysis response, the DNS server or the application server corresponding to the first DNS query. In this way, with the assistance of the first communications device, the second communications device can quickly find the corresponding DNS server or application server.

As shown in FIG. 13, an embodiment of this application further provides an information processing apparatus 1300, including:
a sixth sending module 1301, configured to send DNS query reference information, where
the DNS query reference information includes at least one of the following:
   address information of a DNS server;
   address information of an application server;
   a mapping relationship between the address information and a location of the DNS server;
   a mapping relationship between an address of the DNS server and an ECS option;
   service experience information of the DNS server; and
   service experience information of the application server.

Optionally, the apparatus in this embodiment of this application further includes:
a fourth determining module, configured to: before the sixth sending module sends the DNS query reference information, determine the DNS query reference information.

The apparatus provided in this embodiment of this application can implement the processes implemented in the method embodiment of FIG. 5, and a same technical effect can be achieved. To avoid repetition, details are not described herein again.

In this embodiment of this application, the information processing apparatus sends the DNS query reference information to the first communications device, so that the first communications device assists, based on the DNS query reference information, the second communications device to determine the server (at least one of the DNS server and the application server) corresponding to the first DNS query, thereby enabling the first communications device to quickly find a server with better performance.

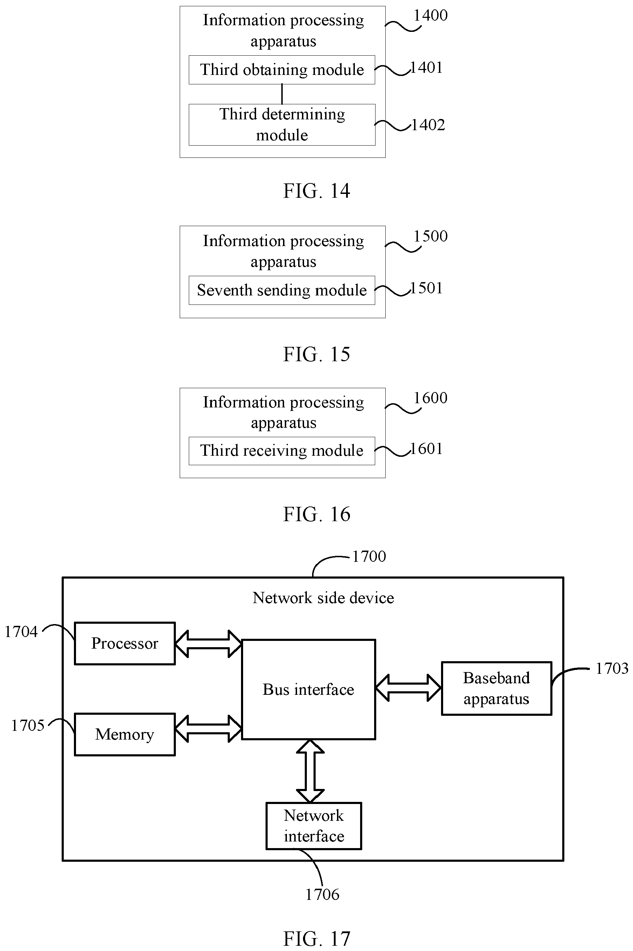

As shown in FIG. 14, an embodiment of this application further provides an information processing apparatus 1400, including:
a third obtaining module 1401, configured to obtain a DNS response; and
a third determining module 1402, configured to determine an accessed application server based on the DNS response, where
the DNS response includes address information of a first application server, the first application server is an application server that is corresponding to a first DNS query and that is determined by a first communications device based on a first analysis request, and the first analysis request is used to request analysis of a first domain name system (DNS) query; or
the DNS response includes a priority of each second application server or an address of an optimal second application server, the second application server is an application server included in a first DNS response, and the first DNS response is a query response sent by a first DNS server.

The apparatus provided in this embodiment of this application can implement the processes implemented in the method embodiment of FIG. 6, and a same technical effect can be achieved. To avoid repetition, details are not described herein again.

In this embodiment of this application, the DNS response is obtained, where the DNS response is obtained after the first communications device analyzes and processes the DNS query reference information based on the first analysis request or the second analysis request. In this way, with the assistance of the first communications device, it is convenient for the third communications device to quickly access a corresponding server.

As shown in FIG. 15, an embodiment of this application further provides an information processing apparatus 1500, including:
a seventh sending module 1501, configured to send a DNS server address, where the DNS server address carries a mark, where
the mark is used to indicate at least one of the following:
   that the DNS server address is sent by an operator;
   that the DNS server is used for an edge computing scenario;
   that the DNS server address is unable to be changed;
   that the DNS server address is suitable for some applications;
   that the DNS server address coexists with a DNS configuration of an original terminal;
   that the DNS server address is invisible to a user or an application;
   that the DNS server address is suitable for some areas or locations;
   that the DNS server address is used for an application edge application that signs a contract with an operator;
   that the DNS server address is used for an edge application;
   that the DNS server address is used for a local data network; and
   that the DNS server address is used for S-NSSAI.

Optionally, the apparatus in this embodiment of this application further includes:
a fifth determining module, configured to determine a mark of the DNS server address.

The apparatus provided in this embodiment of this application can implement the processes implemented in the method embodiment of FIG. 7, and a same technical effect can be achieved. To avoid repetition, details are not described herein again.

In this embodiment of this application, the information processing apparatus sends the DNS server address and marks the DNS server address, thereby facilitating the third communications device to accurately learn of the related information of the DNS server address and make specific distinction.

As shown in FIG. 16, an embodiment of this application further provides an information processing apparatus 1600, including:
a third receiving module 1601, configured to receive a DNS server address, where the DNS server address carries a mark, where
the mark is used to indicate at least one of the following:
   that the DNS server address is sent by an operator;
   that the DNS server is used for an edge computing scenario;
   that the DNS server address is unable to be changed;
   that the DNS server address is suitable for some applications;
   that the DNS server address coexists with a DNS configuration of an original terminal;
   that the DNS server address is invisible to a user or an application;
   that the DNS server address is suitable for some areas or locations;
   that the DNS server address is used for an application edge application that signs a contract with an operator;
   that the DNS server address is used for an edge application;
   that the DNS server address is used for a local data network; and
   that the DNS server address is used for S-NSSAI.

Optionally, the apparatus in this embodiment of this application further includes:
a sixth determining module, configured to determine related information of the DNS server based on the mark carried in the DNS server address.

The apparatus provided in this embodiment of this application can implement the processes implemented in the method embodiment of FIG. 8, and a same technical effect can be achieved. To avoid repetition, details are not described herein again.

According to the information processing apparatus in this embodiment of this application, the third communications device receives the DNS server address, and can accurately learn of the related information of the DNS server address based on the mark of the DNS server address and make specific distinction.

In addition, the information processing apparatus shown in FIG. 14 or FIG. 16 may be an apparatus, or an apparatus or an electronic device with an operating system, or may be a component, an integrated circuit, or a chip in a terminal. The apparatus or the electronic device may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in this embodiment of this application.

An embodiment of this application further provides a network side device, including a processor and a communications interface, where
when the network side device is the first communications device, the communications interface is configured to receive a first analysis request, where the first analysis request is used to request analysis of a first domain name system (DNS) query; and the first communications device sends a first analysis response based on the first analysis request, where
the first analysis response includes at least one of the following:
   related information of a first DNS server; and
   related information of a first application server, where
   the first DNS server is a DNS server corresponding to the first DNS query, and the first application server is an application server corresponding to the first DNS query; or
   the communications interface is configured to receive a second analysis request, where the second analysis request carries an address/addresses of at least one second application server; the processor is configured to analyze the at least one second application server, to obtain an analysis result, where the analysis result includes an address of an optimal second application server, or the analysis result includes at least one of a priority of each second application server and service experience of the second application server; and the communications interface is configured to send the second analysis response, where the second analysis response includes the analysis result, where
   the second analysis request is used for requesting at least one of the following:
      obtaining service experience of the second application server in a DNS response;
      determining an optimal second application server among multiple second application servers in the DNS response; and
      determining a priority of each second application server.

When the network side device is the second communications device, the communications interface is configured to: send a first analysis request, where the first analysis request is used to request analysis of a first domain name system (DNS) query; and obtain a first analysis response, where
the first analysis response includes at least one of the following:
related information of a first DNS server; and
related information of a first application server, where
the first DNS server is a DNS server corresponding to the first DNS query, and the first application server is an application server corresponding to the first DNS query; or
the communications interface is configured to send DNS query reference information, where
the DNS query reference information includes at least one of the following:
   address information of a DNS server;
   address information of an application server;
   a mapping relationship between the address information and a location of the DNS server;
   a mapping relationship between an address of the DNS server and an ECS option;
   service experience information of the DNS server; and
   service experience information of the application server.

Alternatively, the communications interface is configured to send a DNS server address, and the DNS server address carries a mark, where
the mark is used to indicate at least one of the following:
that the DNS server address is sent by an operator;
that the DNS server is used for an edge computing scenario;
that the DNS server address is unable to be changed;
that the DNS server address is suitable for some applications;
that the DNS server address coexists with a DNS configuration of an original terminal;
that the DNS server address is invisible to a user or an application;
that the DNS server address is suitable for some areas or locations;
that the DNS server address is used for an application edge application that signs a contract with an operator;
that the DNS server address is used for an edge application;
that the DNS server address is used for a local data network; and
that the DNS server address is used for S-NSSAI.

This network side device embodiment is corresponding to the foregoing method embodiment on the network side. Each implementation process and implementation of the foregoing method embodiment may be applicable to this network side device embodiment, and a same technical effect can be achieved.

Specifically, an embodiment of this application further provides a network side device. The network side device may be specifically the first communications device or the second communications device. As shown in FIG. 17, the network device 1700 includes a baseband apparatus 1703. The baseband apparatus 1703 processes information to be sent.

The frequency band processing apparatus may be located in the baseband apparatus 1703. The method performed by the network side device in the foregoing embodiment may be implemented in the baseband apparatus 1703. The baseband apparatus 1703 includes a processor 1704 and a memory 1705.

The baseband apparatus 1703 may include, for example, at least one baseband board, where multiple chips are disposed on the baseband board. As shown in FIG. 17, one chip is, for example, the processor 1704, which is connected to the memory 1705, so as to invoke a program in the memory 1705 to perform operations of the network side device shown in the foregoing method embodiment.

The baseband apparatus 1703 may further include a network interface 1706, configured to exchange information with the radio frequency apparatus 1702. For example, the interface is a common public radio interface (common public radio interface, CPRI for short).

Specifically, the network side device in this embodiment of this application further includes an instruction or a program stored in the memory 1705 and executable on the processor 1704. The processor 1704 invokes the instruction or the program in the memory 1705 to perform the method performed by the modules shown in FIG. 10, FIG. 11, FIG. 12, FIG. 13, or FIG. 15, and a same technical effect is achieved. To avoid repetition, details are not described herein again.

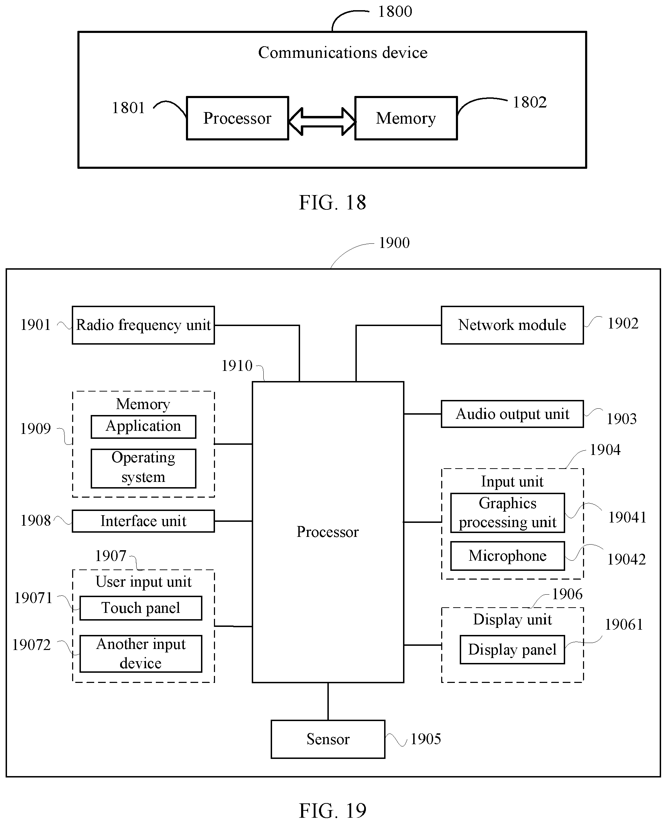

Optionally, as shown in FIG. 18, an embodiment of this application further provides a communications device 1800, including a processor 1801, a memory 1802, and a program or an instruction stored in the memory 1802 and executable on the processor 1801. For example, when the communications device 1800 is a first communications device, and the program or the instruction is executed by the processor 1801, the processes of the foregoing information processing method embodiment applied to the first communications device are implemented, and a same technical effect can be achieved. When the communications device 1800 is a second communications device, and the program or the instruction is executed by the processor 1801, the processes of the foregoing information processing method embodiment applied to the second communications device are implemented, and a same technical effect can be achieved. When the communications device 1800 is a third communications device, and the program or the instruction is executed by the processor 1801, the processes of the foregoing information processing method embodiment applied to the third communications device are implemented, and a same technical effect can be achieved. To avoid repetition, details are not described herein again.

This embodiment of this application further provides a terminal, the terminal may be the third communications device, and includes a processor and a communications interface. Optionally, the communications interface is configured to obtain a DNS response; and the processor determines an accessed application server based on the DNS response, where
the DNS response includes address information of a first application server, the first application server is an application server that is corresponding to a first DNS query and that is determined by a first communications device based on a first analysis request, and the first analysis request is used to request analysis of a first domain name system (DNS) query; or
the DNS response includes a priority of each second application server or an address of an optimal second application server, the second application server is an application server included in a first DNS response, and the first DNS response is a query response sent by a first DNS server.

Optionally, the communications interface receives a DNS server address, and the DNS server address carries a mark, where
the mark is used to indicate at least one of the following:
that the DNS server address is sent by an operator;
that the DNS server is used for an edge computing scenario;
that the DNS server address is unable to be changed;
that the DNS server address is suitable for some applications;
that the DNS server address coexists with a DNS configuration of an original terminal;
that the DNS server address is invisible to a user or an application;
that the DNS server address is suitable for some areas or locations;
that the DNS server address is used for an application edge application that signs a contract with an operator;
that the DNS server address is used for an edge application;
that the DNS server address is used for a local data network; and
that the DNS server address is used for S-NSSAI.

The terminal embodiment is corresponding to the third communications device side method embodiment, each implementation process and implementation of the method embodiment can be applied to the terminal embodiment, and a same technical effect can be achieved. Specifically, FIG. 19 is a schematic diagram of a hardware structure of a terminal for implementing embodiments of this application. The terminal 1900 includes but is not limited to at least part of components such as a radio frequency unit 1901, a network module 1902, an audio output unit 1903, an input unit 1904, a sensor 1905, a display unit 1906, a user input unit 1907, an interface unit 1908, a memory 1909, and a processor 1910.

A person skilled in the art can understand that the terminal 1900 may further include a power supply (such as a battery) that supplies power to each component. The power supply may be logically connected to the processor 1910 by using a power supply management system, to implement functions such as charging and discharging management, and power consumption management by using the power supply management system. The terminal structure shown in FIG. 19 constitutes no limitation on the terminal, and the terminal may include more or fewer components than those shown in the figure, or combine some components, or have different component arrangements. Details are not described herein.

It should be understood that, in this embodiment of this application, the input unit 1904 may include a graphics processing unit (Graphics Processing Unit, GPU) 19041 and a microphone 19042, and the graphics processing unit 19041 processes image data of a still picture or a video obtained by an image capture apparatus (such as a camera) in a video capture mode or an image capture mode. The display unit 1906 may include a display panel 19061. Optionally, the display panel 19061 may be configured in a form such as a liquid crystal display or an organic light-emitting diode. The user input unit 1907 includes a touch panel 19071 and another input device 19072. The touch panel 19071 is also referred to as a touchscreen. The touch panel 19071 may include two parts: a touch detection apparatus and a touch controller. The another input device 19072 may include but is not limited to a physical keyboard, a functional button (such as a volume control button or a power on/off button), a trackball, a mouse, and a joystick. Details are not described herein.

In this embodiment of this application, the radio frequency unit 1901 receives downlink data from a network side device and then sends the downlink data to the processor 1910 for processing; and sends uplink data to the network side device. Usually, the radio frequency unit 1901 includes but is not limited to an antenna, at least one amplifier, a transceiver, a coupler, a low noise amplifier, a duplexer, and the like.

The memory 1909 may be configured to store a software program or an instruction and various data. The memory 1909 may mainly include a program or instruction storage area and a data storage area. The program or instruction storage area may store an operating system, and an application or an instruction required by at least one function (for example, a sound playing function or an image playing function). In addition, the memory 1909 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1910 may include one or more processing units. Optionally, an application processor and a modem processor may be integrated into the processor 1910. The application processor mainly processes an operating system, a user interface, an application, an instruction, or the like. The modem processor mainly processes wireless communication, for example, a baseband processor. It can be understood that, alternatively, the modem processor may not be integrated into the processor 1910.

In an embodiment, the radio frequency unit 1901 is configured to obtain a DNS response; and
the processor 1910 is configured to determine an accessed application server based on the DNS response, where
the DNS response includes address information of a first application server, the first application server is an application server that is corresponding to a first DNS query and that is determined by a first communications device based on a first analysis request, and the first analysis request is used to request analysis of a first domain name system (DNS) query; or
the DNS response includes a priority of each second application server or an address of an optimal second application server, the second application server is an application server included in a first DNS response, and the first DNS response is a query response sent by a first DNS server.

In this embodiment of this application, the terminal obtains the DNS response, where the DNS response is obtained after the first communications device analyzes and processes the DNS query reference information based on the first analysis request or the second analysis request. In this way, with the assistance of the first communications device, it is convenient for the third communications device to quickly access a corresponding server.

In another embodiment, the radio frequency unit 1901 is configured to receive a DNS server address, and the DNS server address carries a mark, where
the mark is used to indicate at least one of the following:
that the DNS server address is sent by an operator;
that the DNS server is used for an edge computing scenario;
that the DNS server address is unable to be changed;
that the DNS server address is suitable for some applications;
that the DNS server address coexists with a DNS configuration of an original terminal;
that the DNS server address is invisible to a user or an application;
that the DNS server address is suitable for some areas or locations;
that the DNS server address is used for an application edge application that signs a contract with an operator;
that the DNS server address is used for an edge application;
that the DNS server address is used for a local data network; and
that the DNS server address is used for S-NSSAI.

In this embodiment of this application, the terminal receives the DNS server address, and can accurately learn of the related information of the DNS server address based on the mark of the DNS server address and make specific distinction.

An embodiment of this application further provides a readable storage medium. A program or an instruction is stored in the readable storage medium. When the program or the instruction is executed by a processor, processes of the embodiment of the information processing method can be implemented, and a same technical effect can be achieved. To avoid repetition, details are not described herein.

The processor is a processor in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to execute a program or an instruction to implement processes of the embodiment of the information processing method, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that in this specification, the term "include", "comprise", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An information processing method, comprising:
receiving, by a first communications device, a first analysis request, wherein the first analysis request is used to request analysis of a first domain name system (DNS) query; and
sending, by the first communications device, a first analysis response based on the first analysis request; wherein
the first analysis response comprises at least one of following:
related information of a first DNS server; and
related information of a first application server; wherein
the first DNS server is a DNS server corresponding to the first DNS query, and the first application server is an application server corresponding to the first DNS query.

2. The method according to claim 1, before the sending a first analysis response, further comprising:
obtaining DNS query reference information; and
determining the first analysis response based on the DNS query reference information; wherein
the DNS query reference information comprises at least one of following:
address information of the DNS server;
address information of the application server;
a mapping relationship between the address information and a location of the DNS server;
a mapping relationship between an address of the DNS server and an evolved DNS client subnet option (ECS option);
service experience information of the DNS server; and
service experience information of the application server.

3. The method according to claim 2, before the obtaining DNS query reference information, further comprising:
sending a subscription request, wherein the subscription request is used for requesting to obtain the DNS query reference information.

4. The method according to claim 1, wherein the related information of the first DNS server comprises: an address of a default DNS server of an edge application server discovery function (EASDF); or
the related information of the first DNS server comprises at least one of an address of a local DNS server and service experience information of the local DNS server; or
the related information of the first DNS server comprises at least one of an ECS option corresponding to a central DNS server, an address of the central DNS server, and service experience information of the central DNS server.

5. The method according to claim 1, wherein the related information of the first application server comprises at least one of following:
an address/addresses of at least one first application server;
a priority/priorities of at least one first application server; and
an address of a first application server recommended by the first communications device.

6. The method according to claim 2, wherein the service experience information of the DNS server comprises at least one of a query response time, an uplink rate, a downlink rate, and a DNS resolution time.

7. The method according to claim 2, wherein the service experience information of the application server comprises at least one of following:
a server response time;
a packet delay;
a packet loss rate;
an uplink communication rate;
a downlink communication rate;
a number of data packets; and
a number of packets retransmitted.

8. The method according to claim 1, wherein the first analysis request comprises at least one of following:
a data network name (DNN);
single network slice selection assistance information (S-NSSAI);
user plane function (UPF) information;
an edge application server discovery function (EASDF) IP address;
a data network access identifier (DNAI);
address information of the first application server;
address information of the first DNS server;
an IP address of a terminal; and
a fully qualified domain name (FQDN) in the first DNS query.

9. An information processing method, comprising:
receiving, by a first communications device, a second analysis request, wherein the second analysis request carries an address/addresses of at least one second application server;
analyzing, by the first communications device, the at least one second application server, to obtain an analysis result, wherein the analysis result comprises an address of an optimal second application server, or the analysis result comprises at least one of a priority of each second application server and service experience of the second application server; and
sending, by the first communications device, the second analysis response, wherein the second analysis response comprises the analysis result; wherein
the second analysis request is used for requesting at least one of following:
obtaining service experience of the second application server in a DNS response;
determining the optimal second application server among multiple second application servers in the DNS response; and
determining the priority of each second application server.

10. The method according to claim 9, wherein the analyzing, by the first communications device, the at least one second application server, to obtain an analysis result comprises:
obtaining, by the first communications device, DNS query reference information, wherein the DNS query reference information comprises at least one of address information of an application server and service experience information of the application server; and
analyzing, by the first communications device, the at least one second application server based on the DNS query reference information, to obtain the analysis result.

11. The method according to claim 10, before the obtaining, by the first communications device, DNS query reference information, further comprising:
sending, by the first communications device, a subscription request, wherein the subscription request is used for requesting to obtain the DNS query reference information.

12. An information processing method, comprising:
sending, by a second communications device, a first analysis request, wherein the first analysis request is used to request analysis of a first domain name system (DNS) query; and
obtaining, by the second communications device, a first analysis response; wherein
the first analysis response comprises at least one of following:
related information of a first DNS server; and
related information of a first application server; wherein
the first DNS server is a DNS server corresponding to the first DNS query, and the first application server is an application server corresponding to the first DNS query.

13. The method according to claim 12, after the obtaining a first analysis response, further comprising:
determining the first DNS server based on the first analysis response; and
sending the first DNS query to the first DNS server.

14. The method according to claim 13, after the sending the first DNS query to the first DNS server, further comprising:
obtaining a first DNS response, wherein the first DNS response comprises an address/addresses of at least one second application server;
sending a second analysis request based on the first DNS response, wherein the second analysis request carries the address/addresses of the at least one second application server; and
obtaining a second analysis response, wherein the second analysis response comprises an address of an optimal second application server, or the second analysis response comprises at least one of a priority of each second application server and service experience of the second application server; wherein
the second analysis request is used for requesting at least one of following:
obtaining service experience of the second application server in the first DNS response;
determining the optimal second application server among multiple second application servers in the first DNS response; and
determining the priority of each second application server.

15. The method according to claim 14, after the obtaining a second analysis response, further comprising:
sending a second DNS response, wherein the second DNS response comprises the address of the optimal second application server, or the analysis result comprises the priority of each second application server.

16. The method according to claim 12, after the obtaining a first analysis response, further comprising:
sending a third DNS response, wherein the third DNS response comprises address information of the first application server.

17. The method according to claim 12, wherein the related information of the first DNS server comprises: an address of a default DNS server of an edge application server discovery function (EASDF); or
the related information of the first DNS server comprises at least one of an address of a local DNS server and service experience information of the local DNS server; or
the related information of the first DNS server comprises at least one of an ECS option corresponding to a central DNS server, an address of the central DNS server, and service experience information of the central DNS server.

18. The method according to claim 12, wherein the related information of the first application server comprises at least one of following:
an address/addresses of at least one first application server;
a priority/priorities of at least one first application server; and
an address of a first application server recommended by the first communications device.

19. An information processing method, comprising:
sending, by a second communications device, DNS query reference information; wherein
the DNS query reference information comprises at least one of following:
address information of a DNS server;
address information of an application server;
a mapping relationship between the address information and a location of the DNS server;
a mapping relationship between an address of the DNS server and an ECS option;
service experience information of the DNS server; and
service experience information of the application server.

20. An information processing method, comprising:
obtaining, by a third communications device, a DNS response; and
determining, by the third communications device, an accessed application server based on the DNS response; wherein
the DNS response comprises address information of a first application server, the first application server is an application server that is corresponding to a first DNS query and that is determined by a first communications device based on a first analysis request, and the first analysis request is used to request analysis of a first domain name system (DNS) query; or
the DNS response comprises a priority of each second application server or an address of an optimal second application server, the second application server is an application server comprised in a first DNS response, and the first DNS response is a query response sent by a first DNS server.

21. An information processing method, comprising:
sending, by a second communications device, a DNS server address, wherein the DNS server address carries a mark; wherein
the mark is used to indicate at least one of following:
that the DNS server address is sent by an operator;
that the DNS server is used for an edge computing scenario;
that the DNS server address is unable to be changed;
that the DNS server address is suitable for some applications;
that the DNS server address coexists with a DNS configuration of an original terminal;
that the DNS server address is invisible to a user or an application;
that the DNS server address is suitable for some areas or locations;
that the DNS server address is used for an application edge application that signs a contract with an operator;
that the DNS server address is used for an edge application;
that the DNS server address is used for a local data network; and
that the DNS server address is used for S-NSSAI.

22. An information processing method, comprising:
receiving, by a third communications device, a DNS server address, wherein the DNS server address carries a mark; wherein
the mark is used to indicate at least one of following:
that the DNS server address is sent by an operator;
that the DNS server is used for an edge computing scenario;
that the DNS server address is unable to be changed;
that the DNS server address is suitable for some applications;
that the DNS server address coexists with a DNS configuration of an original terminal;
that the DNS server address is invisible to a user or an application;
that the DNS server address is suitable for some areas or locations;
that the DNS server address is used for an application edge application that signs a contract with an operator;
that the DNS server address is used for an edge application;
that the DNS server address is used for a local data network; and
that the DNS server address is used for S-NSSAI.

23. An information processing apparatus, comprising:
a first receiving module, configured to receive a first analysis request, wherein the first analysis request is used to request analysis of a first domain name system (DNS) query; and
a first sending module, configured to send a first analysis response based on the first analysis request; wherein
the first analysis response comprises at least one of following:
related information of a first DNS server; and
related information of a first application server; wherein
the first DNS server is a DNS server corresponding to the first DNS query, and the first application server is an application server corresponding to the first DNS query.

24. The apparatus according to claim 23, further comprising:
a first obtaining module, configured to: before the first sending module sends the first analysis response, obtain DNS query reference information; and
a first determining module, configured to determine the first analysis response based on the DNS query reference information; wherein
the DNS query reference information comprises at least one of following:
address information of a DNS server;
address information of an application server;
a mapping relationship between the address information and a location of the DNS server;
a mapping relationship between an address of the DNS server and an evolved DNS client subnet option (ECS option);
service experience information of the DNS server; and
service experience information of the application server.

25. An information processing apparatus, comprising:
a second receiving module, configured to receive a second analysis request, wherein the second analysis request carries an address/addresses of at least one second application server;
a first analyzing module, configured to analyze the at least one second application server, to obtain an analysis result, wherein the analysis result comprises an address of an optimal second application server, or the analysis result comprises at least one of a priority of each second application server and service experience of the second application server; and
a second sending module, configured to send the second analysis response, wherein the second analysis response comprises the analysis result; wherein
the second analysis request is used for requesting at least one of following:
obtaining service experience of the second application server in a DNS response;
determining an optimal second application server among multiple second application servers in the DNS response; and
determining a priority of each second application server.

26. The apparatus according to claim 25, wherein the first analysis module comprises:
a first obtaining submodule, configured to obtain DNS query reference information, wherein the DNS query reference information comprises at least one of address information of an application server and service experience information of the application server; and
a first analyzing submodule, configured to analyze the at least one second application server based on the DNS query reference information, to obtain the analysis result.

27. An information processing apparatus, comprising:
a third sending module, configured to send a first analysis request, wherein the first analysis request is used to request analysis of a first domain name system (DNS) query; and
a second obtaining module, configured to obtain a first analysis response; wherein
the first analysis response comprises at least one of following:
related information of a first DNS server; and
related information of a first application server; wherein
the first DNS server is a DNS server corresponding to the first DNS query, and the first application server is an application server corresponding to the first DNS query.

28. The apparatus according to claim 27, further comprising:
a second determining module, configured to: after the second obtaining module obtains the first analysis response, determine the first DNS server based on the first analysis response; and
a fourth sending module, configured to send the first DNS query to the first DNS server.

29. The apparatus according to claim 27, further comprising:
a fifth sending module, configured to: after the second obtaining module obtains the first analysis response, send a third DNS response, wherein the third DNS response comprises address information of the first application server.

30. An information processing apparatus, comprising:
a sixth sending module, configured to send DNS query reference information; wherein
the DNS query reference information comprises at least one of following:
address information of a DNS server;
address information of an application server;
a mapping relationship between the address information and a location of the DNS server;
a mapping relationship between an address of the DNS server and an ECS option;
service experience information of the DNS server; and
service experience information of the application server.

31. An information processing apparatus, comprising:
a third obtaining module, configured to obtain a DNS response; and
a third determining module, configured to determine an accessed application server based on the DNS response; wherein
the DNS response comprises address information of a first application server, the first application server is an application server that is corresponding to a first DNS query and that is determined by a first communications device based on a first analysis request, and the first analysis request is used to request analysis of a first domain name system (DNS) query; or
the DNS response comprises a priority of each second application server or an address of an optimal second application server, the second application server is an application server comprised in a first DNS response, and the first DNS response is a query response sent by a first DNS server.

32. An information processing apparatus, comprising:
a seventh sending module, configured to send a DNS server address, wherein the DNS server address carries a mark; wherein
the mark is used to indicate at least one of following:
that the DNS server address is sent by an operator;
that the DNS server is used for an edge computing scenario;
that the DNS server address is unable to be changed;
that the DNS server address is suitable for some applications;
that the DNS server address coexists with a DNS configuration of an original terminal;
that the DNS server address is invisible to a user or an application;
that the DNS server address is suitable for some areas or locations;
that the DNS server address is used for an application edge application that signs a contract with an operator;
that the DNS server address is used for an edge application;
that the DNS server address is used for a local data network; and
that the DNS server address is used for S-NSSAI.

33. An information processing apparatus, comprising:
a third receiving module, configured to receive a DNS server address, wherein the DNS server address carries a mark; wherein
the mark is used to indicate at least one of following:
that the DNS server address is sent by an operator;
that the DNS server is used for an edge computing scenario;
that the DNS server address is unable to be changed;
that the DNS server address is suitable for some applications;
that the DNS server address coexists with a DNS configuration of an original terminal;
that the DNS server address is invisible to a user or an application;
that the DNS server address is suitable for some areas or locations;
that the DNS server address is used for an application edge application that signs a contract with an operator;
that the DNS server address is used for an edge application;
that the DNS server address is used for a local data network; and
that the DNS server address is used for S-NSSAI.

34. A communications device, comprising a processor, a memory, and a program or an instruction stored in the memory and executable on the processor, wherein when the program or the instruction is executed by the processor, steps of the information processing method according to any one of claims 1 to 8, or steps of the information processing method according to any one of claims 9 to 11, or steps of the information processing method according to any one of claims 12 to 18, or steps of the information processing method according to claim 19, or steps of the information processing method according to claim 20, or steps of the information processing method according to claim 21, or steps of the information processing method according to claim 22 are implemented.

35. A readable storage medium, wherein the readable storage medium stores a program or an instruction, and when the program or the instruction is executed by a processor, steps of the information processing method according to any one of claims 1 to 8, or steps of the information processing method according to any one of claims 9 to 11, or steps of the information processing method according to any one of claims 12 to 18, or steps of the information processing method according to claim 19, or steps of the information processing method according to claim 20, or steps of the information processing method according to claim 21, or steps of the information processing method according to claim 22 are implemented.
